# EUROPÄISCHE PATENTANMELDUNG

(11) **EP 2 439 428 A1**
(43) Veröffentlichungstag der Anmeldung: **11.04.2012**
(21) Anmeldenummer: 11181188.1
(22) Anmeldetag: 14.09.2011
(51) Int. Cl.: F16H 61/02

(54) **Verfahren zur Schaltsteuerung eines automatisierten Stufenschaltgetriebes**

(30) Priorität: 05.10.2010 DE 102010041969
(71) Anmelder: ZF Friedrichshafen AG, 88038 Friedrichshafen (DE)
(72) Erfinder: Mittelberger, Christian, 88214 Ravensburg (DE); Maier, Alexander, 88046 Friedrichshafen (DE)

(57) **Zusammenfassung**

Die Erfindung betrifft ein Verfahren zur Schaltsteuerung eines automatisierten Stufenschaltgetriebes, das in einem Antriebsstrang eines Kraftfahrzeugs zwischen einem als Verbrennungsmotor ausgebildeten Antriebsmotor und einem Achsantrieb angeordnet ist, wobei während der Fahrt neben aktuellen fahrzeug-, fahrbahn- und fahrerspezifischen Betriebsparametern auch auf einen dem Kraftfahrzeug vorausliegenden Streckenabschnitt bezogene topographische Daten, insbesondere das Höhenprofil, ermittelt wird, und daraus im Automatikmodus des Stufenschaltgetriebes ein optimaler Sollgangverlauf (Gₛₒₗₗ(x_{F})) des Stufenschaltgetriebes für den vorausliegenden Streckenabschnitt bestimmt wird.

Hierzu ist erfindungsgemäß vorgesehen, dass mehrere nach unterschiedlichen Kriterien optimierte Sollgangverläufe bestimmt werden, dass diese Sollgangverläufe jeweils nach mehreren Bewertungskriterien bewertet werden, und dass der am besten bewertete Sollgangverlauf als der für den vorausliegenden Streckenabschnitt zu verwendende optimale Sollgangverlauf (Gₛₒₗₗ(x_{F})) bestimmt wird.

## Beschreibung

Die Erfindung betrifft ein Verfahren zur Schaltsteuerung eines automatisierten Stufenschaltgetriebes gemäß dem Oberbegriff des Patentanspruchs 1.

Moderne Stufenschaltgetriebe, wie automatisierte Schaltgetriebe, Planeten-Automatgetriebe und Doppelkupplungsgetriebe, können sowohl in einem Manuellmodus als auch in einem Automatikmodus betrieben werden. Im Manuellmodus können Schaltungen unmittelbar durch den Fahrer ausgelöst werden, beispielsweise indem der Fahrer mit der Hand einen dafür vorgesehenen Schalthebel in eine Hochschaltrichtung oder in eine Rückschaltrichtung auslenkt. Im Automatikmodus werden Schaltungen dagegen automatisiert ausgelöst, indem aktuelle fahrzeug-, fahrbahn- und fahrerspezifische Betriebsparameter, wie die aktuelle Fahrgeschwindigkeit, die aktuelle Fahrbeschleunigung, die aktuelle Motordrehzahl, das aktuelle Motormoment, die aktuelle Fahrzeugmasse, die aktuelle Fahrbahnneigung (Steigung, Ebene, Gefälle), der aktuelle Fahrwiderstand sowie der aktuelle Fahrerwunsch (Leistungsanforderung des Fahrers oder eines Tempomaten) ermittelt und Schaltungen anhand von Schaltkennfeldern oder Schaltkennlinien ausgelöst werden. Die aktuellen Betriebsparameter können entweder unmittelbar gemessen oder aus gemessenen Werten berechnet werden. Beispielsweise kann der aktuelle Fahrerwunsch mittels einer zugeordneten Kennlinie aus der über ein Potentiometer messbaren Stellung des Fahrpedals abgeleitet werden. In verbesserten Verfahren wird hierzu zusätzlich die berechenbare Änderungsrate der Fahrpedalstellung, also die Stellgeschwindigkeit herangezogen.

Die auf aktuellen Betriebsparametern basierende Schaltsteuerung automatisierter Stufenschaltgetriebe liefert zwar in den meisten Betriebssituationen im Hinblick auf eine ökonomische und komfortable Fahrweise gute Ergebnisse. Besonders im Übergangsbereich zwischen unterschiedlichen Fahrbahnneigungen und Fahrwiderständen ergeben sich jedoch häufig ungünstige Schaltungen, da konventionelle Verfahren zur Schaltsteuerung die Topographie des dem Kraftfahrzeug vorausliegenden Streckenabschnitts nicht oder nur unzureichend berücksichtigen.

So kann beispielsweise vor dem Erreichen einer Bergkuppe eine Rückschaltung ausgelöst werden, obwohl die Bergkuppe mit geringem Geschwindigkeitsverlust noch in dem aktuell eingelegten Gang überwunden und somit die Rückschaltung sowie eine anschließende Hochschaltung vermieden werden könnte. Ebenso ist es in Kenntnis einer bevorstehenden Steigung vorteilhaft, wenn schon vor der Einfahrt in die Steigung in einen niedrigeren Gang zurückgeschaltet wird, da die Steigung dann mit einer höheren Fahrgeschwindigkeit befahren und gegebenenfalls eine weitere Rückschaltung vermieden werden kann. Auch ist es bei einem Übergang von einem Gefälle in eine Ebene zweckmäßig, schon vor dem Erreichen der Ebene in einen höheren Gang hochzuschalten, da hierdurch unter Nutzung der kinetischen Energie des Kraftfahrzeugs mit höherer Fahrgeschwindigkeit in die Ebene eingefahren wird und somit der Übergang in den Zugbetrieb später erfolgt.

Zur Verbesserung des Schaltverhaltens automatisierter Stufenschaltgetriebe sind daher schon einige Verfahren und Vorrichtungen vorgeschlagen worden, welche die Erfassung von auf einen dem Kraftfahrzeug vorausliegenden Streckenabschnitt bezogenen topographischen Daten, insbesondere des Höhenprofils, und deren Berücksichtigung bei der Schaltsteuerung eines automatisierten Stufenschaltgetriebes vorsehen.

So wird in der DE 101 29 149 A1 ein Verfahren zur Optimierung der Kraftübertragung eines Motors auf die Antriebsräder eines Fahrzeugs vorgeschlagen, bei dem für die Vorgabe von Sollwerten für die Motor- und/oder Getriebesteuerung auch Straßen- und Kartendaten eines Navigationssystems verwendet werden. Das bekannte Verfahren sieht vor, dass aus den Straßen-und Kartendaten des Navigationssystems Informationen über die vorausliegende Fahrstrecke, wie die Fahrbahnsteigung, die Fahrbahnkrümmung (Kurvenradius) und weitere Attribute der Fahrbahn sowie ihrer Umgebung ermittelt und daraus Steuerbefehle für die Getriebe- und/oder Motorsteuerung abgeleitet werden.

In der DE 10 2006 001 818 A1 sind ein Verfahren und eine Vorrichtung zur Fahrerunterstützung beim Fahrbetrieb eines Nutzfahrzeugs beschrieben, bei welchen die auf einen dem Kraftfahrzeug vorausliegenden Streckenabschnitt der Fahrtroute bezogenen Topographiedaten aus einem elektronischen Speicher abgerufen und bei der Einstellung von Fahrbetriebskomponenten, insbesondere bei der Einstellung eines Gangs des Schaltgetriebes durch die Getriebesteuerung, rechnergestützt ausgewertet werden. Die Topographiedaten können in Form eines Höhenprofils oder eines Steigungsprofils der jeweiligen Fahrtroute abgespeichert sein.

Schließlich sind aus der DE 10 2005 050 753 A1 ein Verfahren und eine Vorrichtung zur Steuerung und/oder Regelung eines automatischen Systems eins Kraftfahrzeugs bekannt, bei welchen zur Erfassung einer vor dem Kraftfahrzeug liegenden Fahrstrecke Daten erfasst und zu einem Fahrwiderstandsprofil des Kraftfahrzeugs zusammengefasst werden. Das ermittelte Fahrwiderstandsprofil soll unter anderem dazu genutzt werden, in einem Automatgetriebe eine zur Bewältigung der vor dem Kraftfahrzeug liegenden Fahrstrecke geeignete Getriebeübersetzung einzustellen.

Die bekannten Verfahren und Vorrichtungen liefern zwar brauchbare Ansätze zur Verbesserung des Schaltverhaltens automatisierter Stufenschaltgetriebe. Nachteilig daran ist jedoch, dass sich jeweils nur ein einziger Sollgangverlauf ergibt, der für den vorausliegenden Streckenabschnitt nach vorgegebenen Kriterien optimiert ist und somit naturgemäß die Anforderungen des Fahrzeugherstellers, des Fahrzeugbetreibers und des Fahrers nicht zugleich erfüllen kann.

Vor diesem Hintergrund liegt der vorliegenden Erfindung die Aufgabe zugrunde, ein Verfahren zur Schaltsteuerung eines automatisierten Stufenschaltgetriebes der eingangs genannten Art anzugeben, mit dem im Automatikmodus aus dem Höhenprofil des vorausliegenden Streckenabschnitts ein auf einfache Weise an die vorrangig zu erfüllenden Kriterien der Fahrzeugnutzung adaptierbarer Sollgangverlauf abgeleitet werden kann.

Diese Aufgabe wird in Verbindung mit den Merkmalen des Oberbegriffs des Hauptanspruchs dadurch gelöst, dass mehrere nach unterschiedlichen Kriterien optimierte Sollgangverläufe bestimmt werden, dass diese Sollgangverläufe jeweils nach mehreren Bewertungskriterien bewertet werden, und dass der am besten bewertete Sollgangverlauf als der für den vorausliegenden Streckenabschnitt zu verwendende optimale Sollgangverlauf bestimmt wird.

Vorteilhafte Ausgestaltungen und Weiterbildungen des erfindungsgemäßen Verfahrens sind Gegenstand der Unteransprüche.

Die Erfindung geht demnach aus von einem an sich bekannten automatisierten Stufenschaltgetriebe, das in einem Antriebsstrang eines Kraftfahrzeugs zwischen einem als Verbrennungsmotor ausgebildeten Antriebsmotor und einem Achsantrieb angeordnet ist. Während der Fahrt werden fortlaufend, das heißt in einem bestimmten Zeittakt oder Fahrwegabstand, neben aktuellen fahrzeug-, fahrbahn- und fahrerspezifischen Betriebsparametern auch auf einen dem Kraftfahrzeug vorausliegenden Streckenabschnitt bezogene topographische Daten, insbesondere das jeweilige Höhenprofil, ermittelt. Aus dem sich daraus ergebenden Steigungsprofil kann in Kenntnis der Fahrzeugmasse, des Luftwiderstandsbeiwertes und des Rollwiderstandsbeiwertes für jeden Wegpunkt der Fahrwiderstand F_{FW} nach der bekannten Fahrwiderstandsformel F_{FW} = F_{Luft} + F_{Roll} + F_{Steig} + F_{Beschl} als Summe aus dem Luftwiderstand F_{Luft}, dem Rollwiderstand F_{Roll}, dem Steigungswiderstand F_{Steig} und dem Beschleunigungswiderstand F_{Beschl} bestimmt werden. Somit kann in einem iterativen Verfahren vorab mindestens ein nach einem vorrangig verfolgten Kriterium optimierter Schaltungsablauf bestimmt werden.

Das Verfahren gemäß der Erfindung sieht nun vor, dass mehrere nach unterschiedlichen Kriterien optimierte Sollgangverläufe bestimmt werden, und dass diese Sollgangverläufe jeweils nach mehreren Bewertungskriterien bewertet werden. Demnach werden mehrere, nach unterschiedlichen Kriterien optimierte Schaltungsabläufe und deren Auswirkung auf relevante Betriebseigenschaften, wie z.B. den Kraftstoffverbrauch oder die durchschnittliche Fahrgeschwindigkeit, vorab bestimmt. Als der für den vorausliegenden Streckenabschnitt zu verwendende optimale Sollgangverlauf wird dann der am besten bewertete Sollgangverlauf bestimmt.

Hierdurch ist gegenüber den bekannten Verfahren eine größere Flexibilität gegeben, da durch die bewertungsabhängige Auswahl des Sollgangverlaufs der für unterschiedliche Streckenabschnitte jeweils am besten geeignete Schaltungsablauf ermittelt wird. Zudem kann die Auswahl des optimalen Sollgangverlaufs, wie nachfolgend noch erläutert wird, durch eine Konfigurierung des Bewertungsverfahrens auf einfache Weise appliziert, d.h. an spezielle Anforderungen des Fahrzeugherstellers, des Fahrzeugbetreibers oder des Fahrers angepasst werden.

So ist bevorzugt vorgesehen, dass zumindest ein verbrauchsorientierter Sollgangverlauf, bei dem sich für den vorausliegenden Streckenabschnitt der geringste Kraftstoffverbrauch ergibt, ein fahrleistungsorientierter Sollgangverlauf, bei dem sich für den vorausliegenden Streckenabschnitt die kürzeste Fahrzeit ergibt, und ein komfortorientierter Sollgangverlauf, bei dem sich für den vorausliegenden Streckenabschnitt die geringste Anzahl von Schaltungen ergibt, bestimmt und bewertet werden.

Zusätzlich kann auch ein emissionsorientierter Sollgangverlauf, bei dem sich für den vorausliegenden Streckenabschnitt die geringste Menge an Schadstoff- und CO₂-Emissionen ergibt, und/oder ein fahrerorientierter Sollgangverlauf, bei dem der Schaltungsablauf weitgehend dem Schaltverhalten des Fahrers entspricht, bestimmt und bewertet werden.

Als Bewertungskriterien für die verschiedenen Sollgangverläufe werden zumindest die jeweils auf den vorausliegenden Streckenabschnitt bezogene Menge des verbrauchten Kraftstoffs, die benötigte Fahrzeit und die Anzahl der vorgesehenen Schaltungen verwendet.

Zusätzlich kann als Bewertungskriterium für die verschiedenen Sollgangverläufe die auf den vorausliegenden Streckenabschnitt bezogene Menge der Schadstoff- und CO₂-Emissionen und/oder der auf den vorausliegenden Streckenabschnitt bezogene Grad der Übereinstimmung des Fahrverhaltens, insbesondere des Schaltverhaltens, mit dem Fahr- und Schaltverhalten des Fahrers verwendet werden.

Die Bewertung der verschiedenen Sollgangverläufe erfolgt bevorzugt jeweils durch die Bildung von Einzelindizes I_{B_i} für jedes Bewertungskriterium und die Aufsummierung der Einzelindizes zu einem Gesamtindex I_{B_ges}, d.h. in Form der Gleichung I_{B}__{ges} = ∑ I_{B}_ᵢ, mit i = 1 ― n_{BK}, wobei mit n_{BK} die Anzahl der Bewertungskriterien bezeichnet ist.

Es versteht sich in Kenntnis der Erfindung von selbst, dass der nach einem bestimmten Kriterium optimierte Sollgangverlauf, wie z.B. der verbrauchsorientierte Sollgangverlauf, in dem entsprechenden Bewertungskriterium, d.h. in dem gewählten Beispiel in dem Einzelindex für die auf den vorausliegenden Streckenabschnitt bezogene Menge des verbrauchten Kraftstoffs, die höchste Bewertung erreicht.

Da Gesamtbewertung der Sollgangverläufe, d.h. der jeweilige Gesamtindex I_{B}__{ges}, aber aus mehreren Einzelindizes gebildet wird, mit denen die ermittelten Sollgangverläufe jeweils nach unterschiedliche Bewertungskriterien bewertet werden, wird automatisch der für den vorausliegenden Streckenabschnitt am besten geeignete Sollgangverlauf als zu verwendender optimaler Sollgangverlauf Gₛₒₗₗ(x_{F}) bestimmt. Dies bedeutet auch, dass über eine längere Fahrstrecke von Streckenabschnitt zu Streckenabschnitt zwischen nach unterschiedlichen Kriterien optimierten Sollgangverläufen gewechselt werden kann. Die Auswahl des jeweils optimalen Sollgangverlaufs wird somit entscheidend von der Art der Bewertung beeinflusst.

Die Bewertung der verschiedenen Sollgangverläufe kann in einer Punktebewertung durchgeführt werden, bei welcher der Einzelindex I_{B}_ᵢ des am besten bewerteten Sollgangverlaufs jeweils gleich einer festgelegten Höchstpunktzahl gesetzt wird, und der Einzelindex I_{B}_ᵢ des am schlechtesten bewerteten Sollgangverlaufs jeweils gleich einer festgelegten Mindestpunktzahl gesetzt wird, und bei welcher derjenige Sollgangverlauf als der optimale Sollgangverlauf Gₛₒₗₗ(x_{F}) bestimmt wird, dessen Gesamtindex I_{B}__{ges} den höchsten Zahlenwert aufweist.

Alternativ dazu ist es jedoch auch möglich, dass die Bewertung der verschiedenen Sollgangverläufe in einer Rangfolgenbewertung durchgeführt wird, bei welcher der Einzelindex I_{B_i}' des am besten bewerteten Sollgangverlaufs jeweils gleich dem eins gesetzt und der Einzelindex I_{B_i}' des am schlechtesten bewerteten Sollgangverlaufs jeweils gleich der Anzahl der berechneten Sollgangverläufe gesetzt wird, und bei welcher derjenige Sollgangverlauf als der optimale Sollgangverlauf Gₛₒₗₗ(x_{F}) bestimmt wird, dessen Gesamtindex I_{B_ges}' den niedrigsten Zahlenwert aufweist.

Zur Konfigurierung der Bestimmung des optimalen Sollgangverlaufs Gₛₒₗₗ(x_{F}) werden die Einzelindizes I_{B_i}, I_{B_i}' bei der Bildung der Gesamtindizes I_{B_ges}, I_{B_ges}' jeweils mit einem applizierbaren Gewichtungsfaktor F_{G_i}, F_{G_i}' multipliziert, so dass die Ermittlung der Gesamtindizes jeweils nach der Gleichung I_{B_ges}, = ∑ I_{B_i *} F_{G_i}, mit i = 1 ― n_{BK} bzw. nach der Gleichung I_{B_ges},' = ∑ I_{B_i}' _{*} F_{G_i}', mit i' = 1 ― n_{BK} erfolgt.

Die Applikation der Gewichtungsfaktoren F_{G_i}, F_{G_i}' kann nach Anforderung des Fahrzeugherstellers bei dem Getriebehersteller oder nach Anforderung des Fahrzeugbetreibers oder eines Fahrers in einer Servicewerkstatt durchgeführt werden. Möglich ist es jedoch auch, dass die Applikation der Gewichtungsfaktoren F_{G_i}, F_{G_i}' an einem entsprechenden Bedienungsgerät, wie z.B. an dem Display bzw. einer Eingabevorrichtung eines Bordcomputers durch die Anwahl eines entsprechenden Konfigurationsmenüs, von dem Fahrer selbst vorgenommen werden kann, z.B. indem die verwendeten Bewertungskriterien in die Kategorien "sehr wichtig", "wichtig", und "weniger wichtig" eingeteilt werden.

Bei einer Punktebewertung der verschiedenen Sollgangverläufe erfolgt die Konfigurierung der Bestimmung des optimalen Sollgangverlaufs bevorzugt derart, dass der betreffende Gewichtungsfaktor F_{G_i} bei neutraler Priorität des zugeordneten Bewertungskriteriums gleich eins, bei hoher Priorität des zugeordneten Bewertungskriteriums auf einen Wert größer als eins, und bei niedriger Priorität des zugeordneten Bewertungskriteriums auf einen Wert kleiner als eins gesetzt wird.

Bei einer Rangfolgenbewertung der verschiedenen Sollgangverläufe erfolgt die Konfigurierung der Bestimmung des optimalen Sollgangverlaufs dagegen derart, dass der betreffende Gewichtungsfaktor F_{G_i}' bei neutraler Priorität des zugeordneten Bewertungskriteriums gleich eins, bei hoher Priorität des zugeordneten Bewertungskriteriums auf einen Wert kleiner als eins, und bei niedriger Priorität des zugeordneten Bewertungskriteriums auf einen Wert größer als eins gesetzt wird.

Zur Nutzung des optimalen Sollgangverlaufs im Tempomatbetrieb, bei dem die Fahrgeschwindigkeit zwischen einer unteren Grenzgeschwindigkeit und einer oberen Grenzgeschwindigkeit auf eine Sollgeschwindigkeit geregelt wird, ist gemäß der Erfindung vorgesehen, dass bedarfsweise die untere Grenzgeschwindigkeit und/oder die obere Grenzgeschwindigkeit in geeigneter Weise angepasst wird.

So wird beispielsweise nach der Auswahl des verbrauchsorientierten Sollgangverlaufs als optimaler Sollgangverlauf die obere Grenzgeschwindigkeit zweckmäßig erhöht, so dass mit erhöhter Fahrgeschwindigkeit in eine Steigung eingefahren und somit eine verbrauchsungünstige Bergauffahrt in einem niedrigeren Gang mit erhöhter Motordrehzahl vermieden wird.

Ebenso kann nach der Auswahl des fahrleistungsorientierten Sollgangverlaufs als optimaler Sollgangverlauf eine Erhöhung der unteren Grenzgeschwindigkeit sinnvoll sein, da hierdurch bei der Einfahrt in eine Steigung früher zurückgeschaltet und somit ein größerer Geschwindigkeitsverlust vermieden wird.

Zur Verdeutlichung der Erfindung ist der Beschreibung eine Zeichnung mit Ausführungsbeispielen beigefügt. In dieser zeigt
- Fig. 1: ein Funktionsschema zur Ermittlung eines optimalen Sollgangverlaufs,
- Fig. 2: ein Teilschema von Fig. 1 zur Erläuterung der Ermittlung und Bewertung mehrerer Sollgangverläufe,
- Fig. 3: ein dreiteiliges Diagramm mit einem Höhenverlauf (Teil a), einem Fahrgeschwindigkeitsverlauf (Teil b) und einem konventionell ermittelten Gangverlauf (Teil c), jeweils über der Fahrstrecke,
- Fig. 4: ein dreiteiliges Diagramm mit einem Höhenverlauf (Teil a), einem Fahrgeschwindigkeitsverlauf (Teil b) und einem verbrauchsorientiert ermittelten Sollgangverlauf (Teil c), jeweils über der Fahrstrecke, und

- Fig. 5: ein dreiteiliges Diagramm mit einem Höhenverlauf (Teil a), einem Fahrgeschwindigkeitsverlauf (Teil b) und einem fahrleistungsorientiert ermittelten Sollgangverlauf (Teil c), jeweils über der Fahrstrecke.

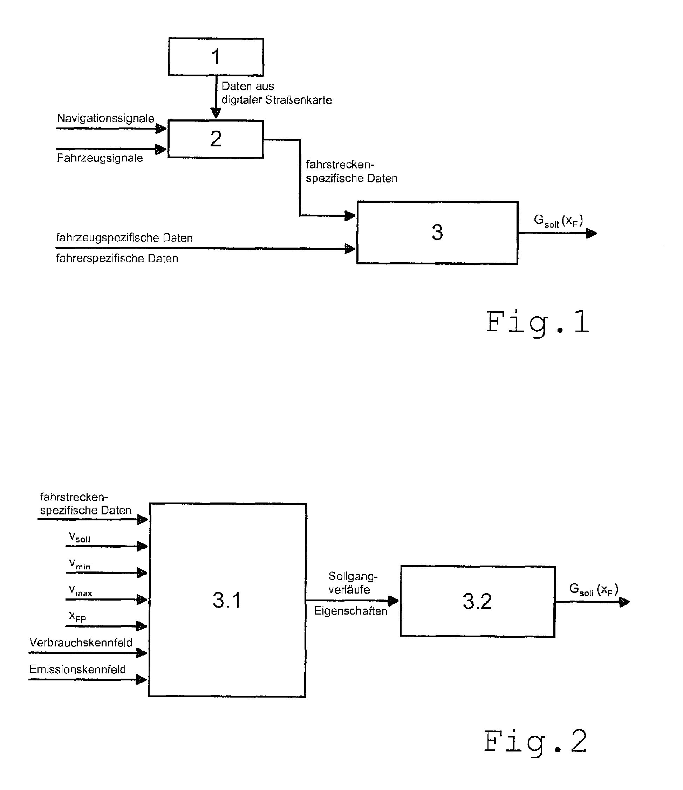

In Fig. 1 ist in schematischer Form der Funktionsablauf zur erfindungsgemäßen Ermittlung eines optimalen Sollgangverlaufs Gₛₒₗₗ(x_{F}) für einen vor einem Kraftfahrzeug befindlichen Streckenabschnitt einer Fahrstrecke dargestellt. In einem ersten Auswertungsmodul 2 werden Navigationssignale, die z.B. von GPS-Satelliten stammen können, und Fahrzeugsignale, die z.B. die aktuelle Fahrgeschwindigkeit v_{F} umfassen können, zusammen mit Daten einer digitalen Straßenkarte, die einem Datenspeichermodul 1 entnommen werden, ausgewertet.

Bei dem Datenspeichermodul 1 kann es sich um ein im Kraftfahrzeug befindliches Lesegerät mit einem eingelegten Datenspeicher handeln, beispielsweise um ein CD-ROM-Laufwerk mit einer eingelegten CD, wobei der Datenspeicher topographische Daten von Straßen enthält, wie das Höhenprofil und gegebenenfalls auch die Kurvenverläufe der Straßen, sowie verkehrsrelevante Attribute der Straßen, wie die Straßenkategorie und der Fahrbahnbelag der jeweiligen Straße, und Geschwindigkeitsbeschränkungen sowie Kreuzungsbereiche und Ortsdurchfahrten der jeweiligen Streckenabschnitte.

Anhand der Eingangssignale wird in dem ersten Auswertungsmodul 2 die aktuelle Position und Fahrtrichtung des Kraftfahrzeugs bestimmt und aus dem Datenspeichermodul 2 die entsprechenden Daten für den vor dem Kraftfahrzeug befindlichen Streckenabschnitt eingelesen und ausgewertet. Als Ergebnis der Auswertung werden fahrstreckenspezifische Daten, die sich auf den dem Kraftfahrzeug vorausliegenden Streckenabschnitt von z.B. 400 m beziehen, an das zweite Auswertungsmodul 3 weitergegeben.

Bei den fahrstreckenspezifischen Daten kann es sich z.B. um das aus dem Höhenprofil berechnete Steigungsprofil des vorausliegenden Streckenabschnitts sowie um die eingelesenen Positionen und Eigenschaften der auf diesem Streckenabschnitt befindlichen engeren Kurven und Geschwindigkeitsbeschränkungen handeln. Das erste Auswertungsmodul 2 kann als Steuergerät oder Softwaremodul in einem Navigationssystem enthalten sein. Möglich ist jedoch auch eine Anordnung des ersten Auswertungsmoduls 2 innerhalb des Getriebesteuergerätes des Stufenschaltgetriebes. Für die Signal- und Datenerfassung sowie die Weitergabe der Ergebnisdaten können spezielle Signal- und Datenleitungen oder ein vorhandener Datenbus, wie z.B. ein CAN-Bus, genutzt werden.

In dem zweiten Auswertungsmodul 3, das bevorzugt Bestandteil des betreffenden Getriebesteuergerätes ist, werden nun die ermittelten fahrstreckenspezifischen Daten zusammen mit fahrzeugspezifischen Daten, wie z.B. den Verbrauchs- und Emissionskennfeldern des Antriebsmotors, und mit fahrerspezifischen Daten, wie z.B. im Fahrpedalbetrieb der aktuellen Fahrpedalstellung x_{FP} und im Tempomatbetrieb der eingestellten Sollgeschwindigkeit vₛₒₗₗ der unteren Grenzgeschwindigkeit vₘᵢₙ und der oberen Grenzgeschwindigkeit Vₘₐₓ ausgewertet.

Wie in Fig. 2 näher dargestellt ist, werden im Rahmen der Auswertung innerhalb des zweiten Auswertungsmoduls 3 zunächst in einem Berechnungsmodul 3.1 mehrere nach unterschiedlichen Kriterien optimierte Sollgangverläufe und deren Eigenschaften für den vorausliegenden Streckenabschnitt berechnet.

So werden zumindest ein verbrauchsorientierter Sollgangverlauf, bei dem sich für den vorausliegenden Streckenabschnitt der geringste Kraftstoffverbrauch ergibt, ein fahrleistungsorientierter Sollgangverlauf, bei dem sich für den vorausliegenden Streckenabschnitt die kürzeste Fahrzeit ergibt, und ein komfortorientierter Sollgangverlauf, bei dem sich für den vorausliegenden Streckenabschnitt die geringste Anzahl von Schaltungen ergibt, ermittelt. Des weiteren kann ein emissionsorientierter Sollgangverlauf, bei dem sich für den vorausliegenden Streckenabschnitt die geringste Menge an Schadstoff- und CO₂-Emissionen ergibt, und/oder ein fahrerorientierter Sollgangverlauf, bei dem der Schaltungsablauf weitgehend dem vorab ermittelten Schaltverhalten des Fahrers entspricht, ermittelt werden.

Die Eigenschaften dieser Sollgangverläufe, die zumindest die auf den vorausliegenden Streckenabschnitt bezogene Menge des verbrauchten Kraftstoffs, die benötigte Fahrzeit und die Anzahl der vorgesehenen Schaltungen umfassen, zusätzlich aber auch die auf den vorausliegenden Streckenabschnitt bezogene Menge der Schadstoff- und CO₂-Emissionen und/oder den auf den vorausliegenden Streckenabschnitt bezogenen Grad der Übereinstimmung des Fahrverhaltens, insbesondere des Schaltverhaltens, mit dem Fahr- und Schaltverhalten des Fahrers umfassen kann, werden in dem Auswahlmodul 3.2 bewertet.

Als optimaler und somit in dem nachfolgenden Streckenabschnitt tatsächlich zu verwendender Sollgangverlauf Gₛₒₗₗ(x_{F}) wird derjenige Sollgangverlauf bestimmt, dessen Gesamtbewertung am besten ausgefallen ist. Somit wird jeweils diejenige Fahr- und Schaltstrategie gewählt, die für den vorausliegenden Streckenabschnitt am besten geeignet ist. Über eine anwendbare Gewichtung der einzelnen Bewertungskriterien kann die Auswahl des optimalen Sollgangverlaufs Gₛₒₗₗ(x_{F}) in gewünschter Weise beeinflusst, d.h. konfiguriert werden.

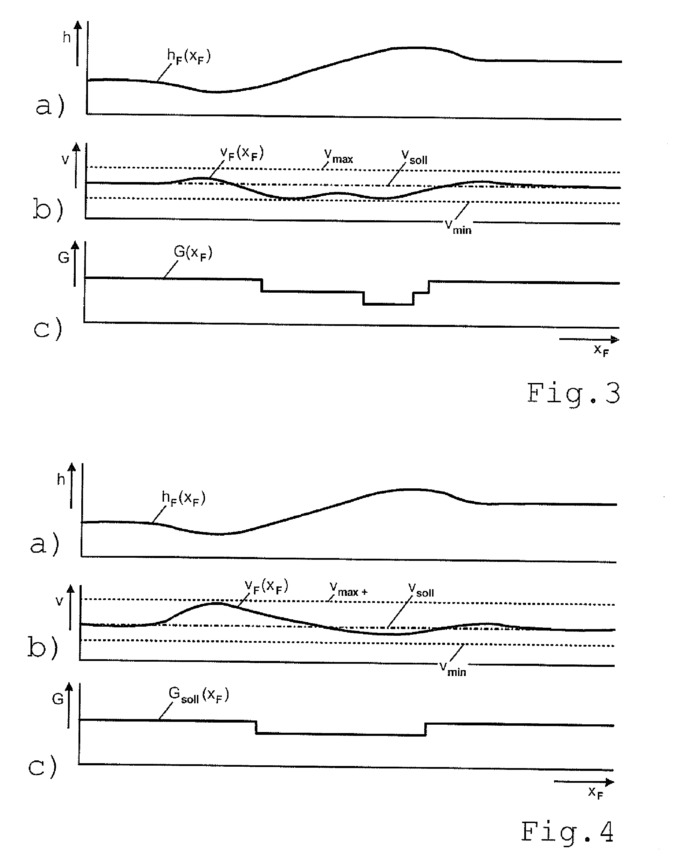

Nachfolgend wird die Auswirkung der Auswahl eines optimalen Sollgangverlaufs Gₛₒₗₗ(x_{F}) anhand von zwei Beispielen erläutert. Hierzu ist zunächst in Teil a) von Fig. 3 der Höhenverlauf h_{F}(x_{F}) eines vor dem Kraftfahrzeug befindlichen Streckenabschnitts über der Fahrstrecke x_{F} abgebildet. In Teil b) von Fig. 3 ist der entsprechende Geschwindigkeitsverlauf v_{F}(x_{F}) und in Teil c) von Fig. 3 der entsprechende Gangverlauf G(x_{F}) abgebildet, die sich im Tempomatbetrieb bei einer konventionellen Schaltsteuerung, d.h. ohne die Berücksichtigung von topographischen Daten und Attributen des vor dem Kraftfahrzeug befindlichen Streckenabschnitts, ergeben würden.

Hierbei erfolgt eine Rückschaltung jeweils dann, wenn sich die Fahrgeschwindigkeit v_{F} der unteren Grenzgeschwindigkeit vₘᵢₙ des Tempomaten nähert. Eine Hochschaltung erfolgt jeweils dann, wenn sich die Fahrgeschwindigkeit v_{F} der Sollgeschwindigkeit vₛₒₗₗ des Tempomaten nähert oder diese überschreitet. Aufgrund der relativ späten ersten Rückschaltung zu Beginn der erkennbaren Steigung kommt es zu einem starken Geschwindigkeitsverlust, der eine weitere Rückschaltung in der Steigung zur Folge hat. Aufgrund der vielen Rückschaltungen und der insgesamt vielen Schaltvorgänge ist dieser Gangverlauf G(x_{F}) weder besonders ökonomisch noch komfortabel.

Im Gegensatz dazu sind in Fig. 4 für denselben Höhenverlauf h_{F}(x_{F}) (siehe Fig. 4a) der Geschwindigkeitsverlauf v_{F}(x_{F}) (siehe Fig. 4b) und der Sollgangverlauf Gₛₒₗₗ(x_{F}) (siehe Fig. 4c) für eine verbrauchsorientierte Optimierung eines Sollgangverlaufs Gₛₒₗₗ(x_{F}) abgebildet. Für die Umsetzung des verbrauchsorientierten Sollgangverlaufs Gₛₒₗₗ(x_{F}) ist die obere Grenzgeschwindigkeit vₘₐₓ des Tempomaten auf einen höheren Wert vₘₐₓ_₊ erweitert worden, so dass mit erhöhter Fahrgeschwindigkeit v_{F} in die erkennbare Steigung eingefahren werden kann und nur eine einzige Rückschaltung erforderlich ist, die im Vergleich zur konventionellen Schaltsteuerung früher erfolgt. Hierdurch können weitere Rückschaltungen und damit verbundene hohe Motordrehzahlen mit erhöhtem Kraftstoffverbrauch vermieden werden.

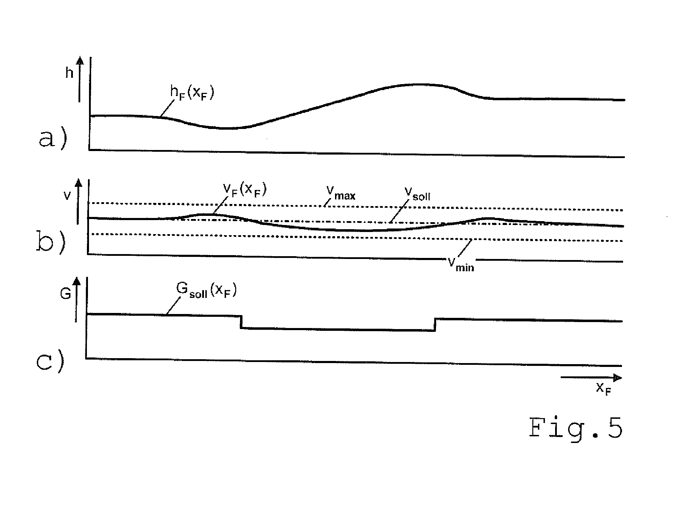

In einem zweiten Beispiel sind in Fig. 5 für denselben Höhenverlauf h_{F}(x_{F}) (siehe Fig. 5a) der Geschwindigkeitsverlauf v_{F}(x_{F}) (siehe Fig. 5b) und der Sollgangverlauf Gₛₒₗₗ(x_{F}) (siehe Fig. 5c) für eine fahrleistungsorientierte Optimierung eines Sollgangverlaufs Gₛₒₗₗ(x_{F}) abgebildet. Der fahrleistungsorientierte Sollgangverlauf Gₛₒₗₗ(x_{F}) sieht eine relativ frühe Rückschaltung vor bzw. zu Beginn der erkennbaren Steigung vor, wodurch die Fahrgeschwindigkeit v_{F} relativ hoch gehalten wird, und weitere Rückschaltungen, die zu einem Geschwindigkeitsverlust und demzufolge zu einer längeren Fahrzeit führen würden, vermieden werden können.

### Bezugszeichen

- 1: Datenspeichermodul
- 2: Erstes Auswertungsmodul
- 3: Zweites Auswertungsmodul
- 3.1: Berechnungsmodul
- 3.2: Auswahlmodul
- F_{Beschl}: Beschleunigungswiderstand
- F_{G_i}, F_{G_i}': Gewichtungsfaktor
- F_{FW}: Fahrwiderstand
- F_{Luft}: Luftwiderstand
- F_{Roll}: Rollwiderstand
- F_{Steig}: Steigungswiderstand
- G: Gang
- Gₛₒₗₗ: Sollgang
- h: Höhe
- h_{F}: Höhe der Fahrstrecke
- I_{B_ges}: Bewertungsindex, Gesamtindex
- I_{B_ges}': Bewertungsindex, Gesamtindex
- I_{B_i}, I_{B_i}': Bewertungsindex, Einzelindex
- n_{BK}: Anzahl der Bewertungskriterien
- v_{F}: Fahrgeschwindigkeit
- vₘₐₓ: Obere Grenzgeschwindigkeit
- vₘₐₓ_₊: Erhöhte obere Grenzgeschwindigkeit
- vₘᵢₙ: Untere Grenzgeschwindigkeit
- vₛₒₗₗ: Sollgeschwindigkeit
- x_{F}: Fahrstrecke, Fahrstreckenvariable
- x_{FP}: Fahrpedalstellung

## Patentansprüche

1. Verfahren zur Schaltsteuerung eines automatisierten Stufenschaltgetriebes, das in einem Antriebsstrang eines Kraftfahrzeugs zwischen einem als Verbrennungsmotor ausgebildeten Antriebsmotor und einem Achsantrieb angeordnet ist, wobei während der Fahrt neben aktuellen fahrzeug-, fahrbahn-und fahrerspezifischen Betriebsparametern auch auf einen dem Kraftfahrzeug vorausliegenden Streckenabschnitt bezogene topographische Daten, insbesondere das Höhenprofil, ermittelt wird, und daraus im Automatikmodus des Stufenschaltgetriebes ein optimaler Sollgangverlauf (Gₛₒₗₗ(x_{F})) des Stufenschaltgetriebes für den vorausliegenden Streckenabschnitt bestimmt wird, **dadurch gekennzeichnet, dass** mehrere nach unterschiedlichen Kriterien optimierte Sollgangverläufe bestimmt werden, dass diese Sollgangverläufe jeweils nach mehreren Bewertungskriterien bewertet werden, und dass der am besten bewertete Sollgangverlauf als der für den vorausliegenden Streckenabschnitt zu verwendende optimale Sollgangverlauf (Gₛₒₗₗ(x_{F})) bestimmt wird.

2. Verfahren nach Anspruch 1, **dadurch gekennzeichnet, dass** zumindest ein verbrauchsorientierter Sollgangverlauf, bei dem sich für den vorausliegenden Streckenabschnitt der geringste Kraftstoffverbrauch ergibt, ein fahrleistungsorientierter Sollgangverlauf, bei dem sich für den vorausliegenden Streckenabschnitt die kürzeste Fahrzeit ergibt, und ein komfortorientierter Sollgangverlauf, bei dem sich für den vorausliegenden Streckenabschnitt die geringste Anzahl von Schaltungen ergibt, bestimmt und bewertet werden.

3. Verfahren nach Anspruch 1 oder 2, **dadurch gekennzeichnet, dass** zusätzlich ein emissionsorientierter Sollgangverlauf, bei dem sich für den vorausliegenden Streckenabschnitt die geringste Menge an Schadstoff- und CO₂-Emissionen ergibt, und/oder ein fahrerorientierter Sollgangverlauf, bei dem der Schaltungsablauf weitgehend dem Schaltverhalten des Fahrers entspricht, bestimmt und bewertet wird.

4. Verfahren nach einem der Ansprüche 1 bis 3, **dadurch gekennzeichnet, dass** als Bewertungskriterien für die verschiedenen Sollgangverläufe zumindest die jeweils auf den vorausliegenden Streckenabschnitt bezogene Menge des verbrauchten Kraftstoffs, die benötigte Fahrzeit und die Anzahl der vorgesehenen Schaltungen verwendet werden.

5. Verfahren nach einem der Ansprüche 1 bis 4, **dadurch gekennzeichnet, dass** als Bewertungskriterium für die verschiedenen Sollgangverläufe zusätzlich die auf den vorausliegenden Streckenabschnitt bezogene Menge der Schadstoff- und CO₂-Emissionen und/oder der auf den vorausliegenden Streckenabschnitt bezogene Grad der Übereinstimmung des Fahrverhaltens, insbesondere des Schaltverhaltens, mit dem Fahr- und Schaltverhalten des Fahrers verwendet wird.

6. Verfahren nach einem der Ansprüche 1 bis 5, **dadurch gekennzeichnet, dass** die Bewertung der verschiedenen Sollgangverläufe jeweils durch die Bildung von Einzelindizes (I_{B_i}, I_{B_i}') für jedes Bewertungskriterium und die Aufsummierung der Einzelindizes zu einem Gesamtindex (I_{B_ges}, I_{B_ges}') erfolgt (I_{B_ges} = ∑ I_{B_i}, i = 1 ― n_{BK}; I_{B_ges}' = ∑ I_{B_i}', i = 1 ― n_{BK}).

7. Verfahren nach Anspruch 6, **dadurch gekennzeichnet, dass** die Bewertung der verschiedenen Sollgangverläufe in einer Punktebewertung durchgeführt wird, bei welcher der Einzelindex (I_{B_i} des am besten bewerteten Sollgangverlaufs jeweils gleich einer festgelegten Höchstpunktzahl gesetzt wird, und der Einzelindex (I_{B_i}) des am schlechtesten bewerteten Sollgangverlaufs jeweils gleich einer festgelegten Mindestpunktzahl gesetzt wird, und bei welcher derjenige Sollgangverlauf als der optimale Sollgangverlauf (Gₛₒₗₗ(x_{F})) bestimmt wird, dessen Gesamtindex (I_{B_ges}) den höchsten Zahlenwert aufweist.

8. Verfahren nach Anspruch 6, **dadurch gekennzeichnet, dass** die Bewertung der verschiedenen Sollgangverläufe in einer Rangfolgenbewertung durchgeführt wird, bei welcher der Einzelindex (I_{B_i}') des am besten bewerteten Sollgangverlaufs jeweils gleich eins gesetzt und der Einzelindex (I_{B_i}') des am schlechtesten bewerteten Sollgangverlaufs jeweils gleich der Anzahl der berechneten Sollgangverläufe gesetzt wird, und bei welcher derjenige Sollgangverlauf als der optimale Sollgangverlauf (Gₛₒₗₗ(x_{F})) bestimmt wird, dessen Gesamtindex (I_{B_ges}') den niedrigsten Zahlenwert aufweist.

9. Verfahren nach einem der Ansprüche 6 bis 8, **dadurch gekennzeichnet, dass** zur Konfigurierung der Bestimmung des optimalen Sollgangverlaufs (Gₛₒₗₗ(x_{F})) die Einzelindizes (I_{B_i}, I_{B_i}') bei der Bildung der Gesamtindizes (I_{B_ges}, I_{B_ges}') jeweils mit einem applizierbaren Gewichtungsfaktor (F_{G_i}, F_{G_i}') multipliziert werden (I_{B_ges} = ∑ I_{B_i} * F_{G_i}, i = 1 ― n_{BK}, I_{B_es}' = ∑ I_{B_i}' * F_{G_i}', i = 1 ― n_{BK}).

10. Verfahren nach den Ansprüchen 7 und 9, **dadurch gekennzeichnet, dass** bei der Konfigurierung der Bestimmung des optimalen Sollgangverlaufs (Gₛₒₗₗ(x_{F})) der betreffende Gewichtungsfaktor (F_{G_i}) bei neutraler Priorität des zugeordneten Bewertungskriteriums gleich eins, bei hoher Priorität des zugeordneten Bewertungskriteriums auf einen Wert größer als eins, und bei niedriger Priorität des zugeordneten Bewertungskriteriums auf einen Wert kleiner als eins gesetzt wird.

11. Verfahren nach den Ansprüchen 8 und 9, **dadurch gekennzeichnet, dass** bei der Konfigurierung der Bestimmung des optimalen Sollgangverlaufs (Gₛₒₗₗ(x_{F})) der betreffende Gewichtungsfaktor (F_{G_i}') bei neutraler Priorität des zugeordneten Bewertungskriteriums gleich eins, bei hoher Priorität des zugeordneten Bewertungskriteriums auf einen Wert kleiner als eins, und bei niedriger Priorität des zugeordneten Bewertungskriteriums auf einen Wert größer als eins gesetzt wird.

12. Verfahren nach einem der Ansprüche 1 bis 11, **dadurch gekennzeichnet, dass** zur Umsetzung des optimalen Sollgangverlaufs (Gₛₒₗₗ(x_{F})) im Tempomatbetrieb, bei dem die Fahrgeschwindigkeit (v_{F}) zwischen einer unteren Grenzgeschwindigkeit (vₘᵢₙ) und einer oberen Grenzgeschwindigkeit (vₘₐₓ) auf eine Sollgeschwindigkeit (vₛₒₗₗ) geregelt wird, bedarfsweise die untere Grenzgeschwindigkeit (vₘᵢₙ) und/oder die obere Grenzgeschwindigkeit (vₘₐₓ) in geeigneter Weise angepasst wird.
